# DEMANDE DE BREVET EUROPEEN

(11) **EP 2 140 766 A1**
(43) Date de publication de la demande: **06.01.2010**
(21) Numéro de dépôt: 08011997.7
(22) Date de dépôt: 03.07.2008
(51) Int. Cl.: A23G 1/04, A23G 1/18, A23G 1/36

(54) **Dispositif pour la préparation d'une suspension de cristaux thermostables de matières grasses pour ensemencer des masses grasses afin d'induire et de favoriser leur cristallisation**

(71) Demandeur: HACOS, naamloze vennootschap, 2390 Oostmalle (BE)
(72) Inventeur: Bize, Samuel, 1630 Bulle (CH)
(74) Mandataire: Donné, Eddy

(57) **Abrégé**

Dispositif de préparation de cristaux thermostables de matières grasses polymorphes à hauts points de fusion pour être incorporées en discontinu dans des masses grasses afin d'induire et développer la cristallisation subséquente lors de la solidification. Les cristaux sont ainsi préparés dans un récipient fermé (1) calorifugé et thermostatisé avec précision par circulation d'eau ou d'huile, ou chauffés directement par une ou plusieurs resistances électriques ou autres systèmes thermiques, dans une double enveloppe (1') dudit récipient.

## Description

La présente invention a pour objet un dispositif simple, fiable et économique pour la préparation et le maintien d'une quantité variable, selon les besoins, de matières grasses polymorphes ou de toutes autres graisses pures ou en mélanges avec d'autres ingrédients, partiellement cristallisées de façon à obtenir les formes cristallines stables désirées, et ceci dans le but d'incorporer ces cristaux à des masses contenant des matières grasses polymorphes, c'est à dire qui nécessitent l'incorporation de cristaux afin d'induire et de favoriser la cristallisation subséquente des masses lors du refroidissement (solidification).
Les masses grasses à ensemencer peuvent être destinées à la confiserie, la chocolaterie, la cosmétique ou toutes autres masses contenant des graisses polymorphes.

Le principe et le fonctionnement du dispositif sont basés sur les propriétés polymorphiques du beurre de cacao et/ou autres graisses végétales, animales, substances dérivées comparables (équivalent de beurre de cacao, graisses lactiques etc).

Les pratiques traditionnelles couramment utilisées en confiserie par exemple pour la pré-cristallisation des masses de chocolat, consistent à modifier la température des dites masses de chocolat en abaissant la température par contact avec une surface froide, puis réchauffage pour fondre les formes polymorphes instables et non désirées. Les opérations de «travail» sur le marbre sont fastidieuses; elles se limitent à des quantités relativement petites, de plus la stabilité de la température, de ce fait, est souvent difficile à maintenir.

La présente invention permet de préparer les cristaux dans un récipient fermé, calorifugé et thermostatisé avec précision par circulation d'eau ou d'huile ou chauffés directement par une ou plusieurs résistances électriques ou autres systèmes thermiques, micro-ondes, etc.

Cette préparation se passe en deux étapes, d'abord, le praticien alimente l'entonnoir supérieur avec des morceaux de beurre de cacao ou autres graisses; ensuite ces morceaux non-fondus de beurre de cacao ou autres graisses sont râpés en copeaux de plus petite taille et tombent par gravité dans le récipient thermostatisé situé sous ledit entonnoir. La fusion de beurre de cacao ou autres graisses est partielle. Le choix de la température idéale est fonction de la nature physique et de l'origine du beurre de cacao ou autres graisses.
Les paramètres de fusion partielle sont à déterminer expérimentalement par le praticien de façon à ne maintenir que la ou les formes cristallines polymorphes stables. Cette propriété du beurre de cacao et autres graisses polymorphes, étudiée de longue date et largement publiée, est caractérisée par le fait que les cristaux de graisses peuvent exister sous des formes cristallines différentes par leurs structures et leurs caractéristiques physiques en fonction de la température et du temps. De ce fait, la température du récipient contenant la matière grasse polymorphique est choisie avec soins et précision, elle permet de conserver les formes stables désirées pour l'ensemencement des masses. Le beurre de cacao ou autres graisses est maintenu dans un état où se trouve un mélange de graisses liquides et de graisses solides, il s'agit en fait d'une suspension de cristaux solides dans une phase liquide ; la suspension est alors malaxée en continu d'une manière appropriée afin de rester homogène.

Le dispositif, objet de la présente invention permet de conserver durant plusieurs plusieurs jours la matière grasse partiellement cristallisée thermostable et homogène, disponible pour une incorporation de quelques pourcents (0,1 % à 5% en général) à des masses. Le dispositif est équipé d'un système de recyclage qui assure en permanence le brassage et le «lissage» de la matière grasse. La recirculation et le prélèvement des cristaux peuvent être manuel, au moyen d'un cylindre de dosage ou mécanisé avec une pompe positive (par exemple pompe péristaltique, pompe à engrenages, pompe type mono) dans tous les cas à vitesse de rotation lente, actionnée par un moteur à vitesse variable; tout échauffement de la masse est à éviter.

De plus, il est possible de stimuler la multiplication des cristaux de formes stables par une action mécanique faisant intervenir des forces de cisaillement. Un arrangement spécifique de type «high shear mixer» (brasseur à haut effet de cisaillement) peut être installé sur la tuyauterie de recirculation; en quelques minutes, l'effet de cisaillement au coeur du beurre de cacao ou autres matières grasses, en modifie la texture et la viscosité, ceci étant généré également par ladite multiplication des cristaux. Le choix d'une température adéquate élevée permet de multiplier et de disséminer uniquement les cristaux stables recherchés.
De plus, il est aussi possible de stimuler la multiplication des cristaux de formes stables par l'application d'ultrasons dans la matière grasse polymorphique.

L'ensemencement des masses contenant des graisses polymorphes se fait à température contrôlée, c'est à dire que la température maximale des masses ne doit pas dépasser la température de la masse d'ensemencement au risque de refondre les cristaux stables, mais la température des masses peut être beaucoup plus basse, par exemple :
température du beurre ou graisse d'ensemencement : 33°C
masses à ensemencer : entre 23°C et 33°C

Divers brevets ou inventions revendiquent également l'utilisation des caractéristiques polymorphiques du beurre de cacao ou des autres graisses. Le brevet WO 0072695 décrit notamment une méthode mécano-thermique de préparation de la suspension de micro-cristaux stables destinés à une incorporation en continu dans des masses de chocolat industriel ou de chocolats-équivalents.

La présente invention décrit la préparation et l'incorporation de cristaux stables pour la pré-cristallisation de chocolat non pas en continu mais en batches ou la préparation de masses de chocolat ou autres par charges successives, ceci durant plusieurs jours.

Le volume du récipient pour la préparation des cristaux stables, objet de l'invention, est de 2 à 200 kg, par exemple, sans que le volume préparé soit limité par ces chiffres. Les températures précises d'utilisation peuvent être sélectionnées dans une large mesure, entre 15 et 60 °C environ.
La fig. 1 représente un dispositif simple, manuel pour la préparation de beurre de cacao ou autres graisses polymorphiques à hauts points de fusion, servant à ensemencer des masses.
La fig.2 illustre un dispositif présentant les mêmes fonctions, mais dont les opérations successives de préparation, de lissage et homogénéisation par recirculation et principalement de dosage précis sont assurées par un système programmé et mécanisé.

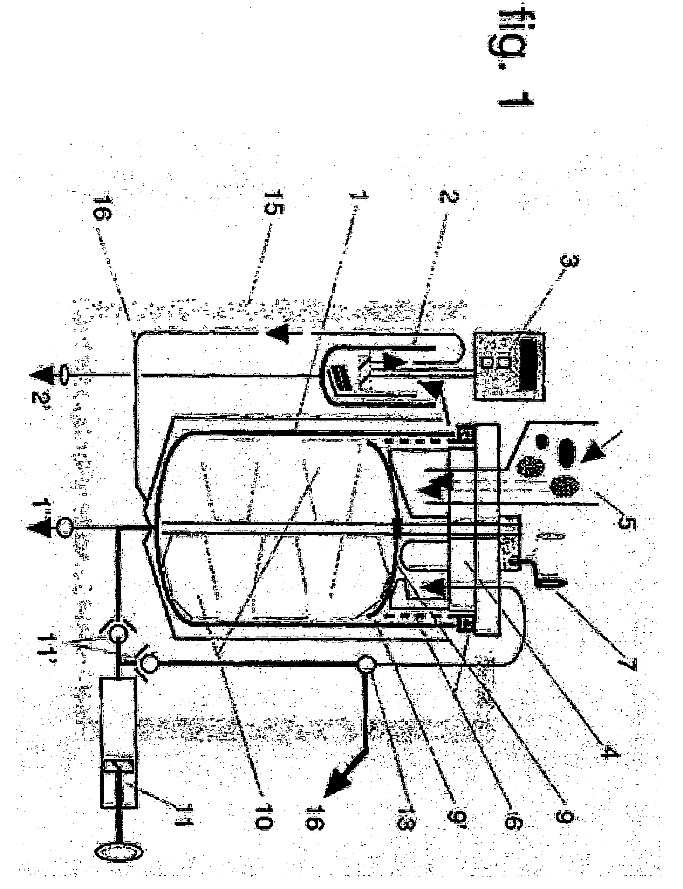

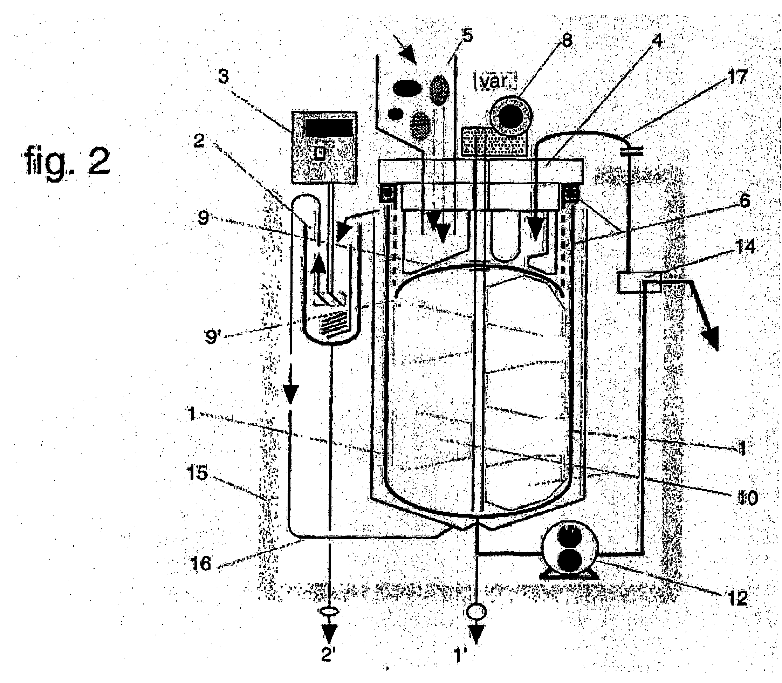

La présente invention ne se limite pas aux concepts, aux dimensions ni aux formes ou exemples présentés dans les fig. 1 et 2.

Le mode opératoire des dispositifs, objet de la présente invention, est dans son principe, équivalent, à savoir :
Le praticien met en marche le groupe de thermisation 2 et 3, comprenant une pompe de circulation, une tuyauterie 16, le corps de chauffe électrique et le régulateur de température ajusté à la température précise choisie (par exemple entre 31 ° à 34°C).
Dès que la température est atteinte ou est proche du point de consigne, l'opérateur introduit des morceaux de beurre de cacao ou autres graisses dans l'entonnoir 5; ces morceaux de beurre de cacao ou autres graisses sont impérativement préparés ou coupés dans un bloc solide (non fondu), pain de beurre stocké à basse température.
Les morceaux tombent sur le fond bombé 9 (ou sur un cône métallique) dont le mouvement de rotation est solidaire de celui du brasseur 10. La cuve de préparation en inox 1 est maintenue à la température choisie par la circulation de l'eau thermostatisée (ou autre système de chauffage ) dans la double enveloppe 1'.
Sur le sommet de la cuve 1, une grille ou râpe 6 est insérée de façon fixe, mais facilement démontable. De plus, un couvercle 4 maintient l'axe de rotation du brasseur, son mécanisme d'entraînement à manivelle 7 ou motorisé 8 avec variateur de vitesse 8'. Le couvercle 4 est équipé de baffles qui laissent passer les morceaux de beurre de cacao ou autres graisses tout en les empêchant de tourner avec le fond bombé 9 de sorte que lesdits morceaux sont râpés et déchiquetés par frottement contre la grille 6. Les copeaux ou petits fragments tombent par gravité dans la fente 9' et remplissent progressivement la cuve 1 tout en se réchauffant lentement au contact de la paroi et du fond de ladite cuve.
Ensuite, l'opérateur procède à la recirculation et au prélèvement du beurre de cacao ou autres graisses, soit par actions manuelles répétées sur la pompe à cylindre 11 équipée des clapets 11', soit par la mise en marche de la pompe positive 12. Par cette recirculation, on obtient un «lissage» et une homogénéisation de la réserve de beurre de cacao ou autres graisses «cristallisées avec des formes polymorphiques à hauts points de fusion» disponibles pour l' incorporation dans une masse contenant des graisses polymorphes. La quantité dosée peut être mesurée avec précision soit par un nombre choisi de mouvements complets de pompage manuel, ceci après avoir orienté le robinet 16 vers l'extérieur de l'enceinte calorifugée 15, soit au moyen d'un relais temporisé actionnant la vanne pilote 14, ceci avec une vitesse de rotation présélectionnée de la pompe 12.

## Revendications

1. Dispositif de préparation dans un système qui permet de maintenir un équilibre thermostable de cristaux de matières grasses polymorphes à hauts points de fusion destinés à être incorporées en discontinu à des masses contenant des graisses polymorphes afin d'induire et de développer la cristallisation subséquente de ces masses lors du refroidissement et de la solidification.

2. Dispositif selon la revendication 1 permettant de maintenir les cristaux de matières grasses de formes polymorphes à hauts points de fusion en équilibre thermostable de la phase solide en suspension dans la phase liquide par le contrôle précis de la température

3. Dispositif selon les revendications 1 et 2 permettant le lissage et l'homogénéisation de la suspension de cristaux stables à ensemencer dans des masses contenant des graisses polymorphes non précristallisées à température inférieure ou égale à celle de la suspension.

4. Dispositif selon la revendication 1 permettant de supprimer le travail de pré-cristallisation par contact avec une surface froide telle que le marbre des chocolatiers ou tout autres systèmes de pré-cristallisation en discontinu.

5. Dispositif selon la revendication 1 prévu pour la multiplication et la dispersion de cristaux stables par un effet mécanique de cisaillement et/ou par une application d'ultrasons opérant durant une durée généralement assez courte lors de la circulation de la suspension des cristaux de graisses polymorphes ou du beurre de cacao à une température adéquate.

6. Dispositif selon la revendication 3 permettant le dosage précis et rapide des cristaux de formes polymorphes à haut points de fusion ainsi préparés afin de les incorporer aux masses grasses de chocolat au moyen d'une pompe positive avec variateur de vitesse de rotation ou par un cylindre de dosage à actions manuelles.

7. Dispositif selon la revendication 1 capable de maintenir une suspension de cristaux de matière grasse cristallisée en équilibre thermostable durant plusieurs jours ceci par l'ajustage optimal d'une température judicieusement choisie en fonction des caractéristiques physiques des graisses.

8. Dispositif prévu pour une utilisation sur table de travail ou dans le cas de plus grande taille sur socle avec ou sans roulettes au sol.

9. Dispositif pour utilisation artisanale ou industrielle facilement démontable, entièrement lavable et stérilisable à l'eau chaude.

10. Dispositif selon les revendications 1 à 9 de petite capacité et destiné à des utilisateurs tels qu'artisans n'ayant pas d'exigence d'automatisme ni de sophistication mécanique.

11. Dispositif selon la revendication 10 prévu pour une recharge périodique en beurre de cacao solide partiellement découpé à la main et réchauffé avec brassage occasionnel à la main en vue d'une utilisation prochaine d'ensemencement par exemple pour le lendemain ou pour les jours suivants.

12. Dispositif selon les revendications 11 réunissant plusieurs cuves isolées et thermostatisées individuellement de façon à disposer simultanément ou non de cristaux stables à différentes températures.

13. Dispositifs de petite capacités groupées selon la revendication 12 avec couvercles servant de piston de mise en pression manuelle dans chaque cuve en vue du ou des dosage(s) de cristaux sans l'usage de pompe(s).

14. Dispositif selon la revendication 13 avec piston à tige graduée dans chaque cuve permettant de mesurer le ou les volume(s) de cristaux à doser.
